# EUROPEAN PATENT APPLICATION

(11) **EP 4 610 859 A1**
(43) Date of publication of application: **03.09.2025**
(21) Application number: 25159242.4
(22) Date of filing: 20.02.2025
(51) Int. Cl.: G06F 21/57, G06F 8/65, H04L 9/40

(54) **AUTOMATED VULNERABILITY REMEDIATION GUIDANCE BASED ON DETECTION LOGIC ELEMENTS**

(30) Priority: 27.02.2024 US 202418588976
(71) Applicant: CrowdStrike, Inc., Sunnyvale, CA 94086 (US)
(72) Inventor: LOMTE, Nitin Deepak, Pune (IN); CHOWDHURY, Somnath, Ghatal (IN); KAHAN, Daniel, Culver City (CA)
(74) Representative: Murgitroyd & Company

(57) **Abstract**

The present disclosure provides an approach of receiving a detection element that includes a vulnerability identifier and a version identifier. The vulnerability identifier corresponds to a vulnerability of an application and the version identifier corresponds to a version of the application effected by the vulnerability. The approach determines a remediation version identifier based on the vulnerability identifier and the version identifier. The remediation version identifier corresponds to a remediation version of the application that remediates the vulnerability. The approach then initiates an update at a client system based on the vulnerability identifier and the remediation version identifier.

## Description

### TECHNICAL FIELD

Aspects of the present disclosure relate to vulnerability remediation, and more particularly, to automated vulnerability remediation guidance based on detection logic elements.

### BACKGROUND

A software vulnerability refers to a weakness or flaw in a software design or implementation that can be exploited to compromise the software's security and functionality. Vulnerability detection involves the identification of such weaknesses or loopholes that may compromise system security. Vulnerability detection may include testing, code review, employing automated vulnerability scanners, or a combination thereof.

When vulnerabilities are detected, typical steps to remediate the vulnerabilities involve risk assessment and vulnerability remediation. Risk assessment may include assessing a vulnerability's potential impact and likelihood of exploitation. Vulnerability remediation may include the development and deployment of software patches or version updates designed to fix the vulnerability.

### SUMMARY

Accordingly there is provided a method, a system, and a computer program as detailed in the claims that follow.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram that illustrates an example system that uses detection elements for determining a version of software to remediate vulnerabilities of an application, in accordance with some embodiments of the present disclosure.
FIG. 2 is a block diagram that illustrates an example system that maps vulnerabilities to effected versions of an application and determines versions of the application to remediate the vulnerabilities, in accordance with some embodiments of the present disclosure.
FIG. 3A is a diagram that illustrates an example vulnerability mapping table that maps vulnerabilities to application tracks, in accordance with some embodiments of the present disclosure.
FIG. 3B is a diagram that illustrates an example system of sending different vulnerability remediation messages to different client systems based on their respective application tracks, in accordance with some embodiments of the present disclosure.
FIG. 4 is a flow diagram of a method that receives a detection element and determines a version of an application to remediate a vulnerability identified by the detection element, in accordance with some embodiments of the present disclosure.
FIG. 5 is a block diagram that illustrates an example system for determining a software remediation version of an application to remediate a vulnerability of the application, in accordance with some embodiments of the present disclosure.
FIG. 6 illustrates a diagrammatic representation of a machine in the example form of a computer system 600 within which a set of instructions, for causing the machine to perform any one or more of the methodologies discussed herein for vulnerability remediation.

### DETAILED DESCRIPTION

As discussed above, vulnerabilities compromise a software's security and functionality. Despite current vulnerability detection and remediation processes, a number of challenges exist to provide automated and accurate remediation guidance. One challenge found is the rate at which new vulnerabilities are discovered, which is often faster than previously detected vulnerabilities can be remediated and therefore leading to an ever-growing backlog of unaddressed vulnerabilities. Another challenge found is providing remediations for detected vulnerabilities in software products. Vulnerability detection systems primarily focus on identifying and reporting potential threats, but the process of remediation, which involves resolving the identified threats, is still a manual process.

Another challenge found is that, due to a variety of client system constraints such as stability considerations, compatibility issues, time, cost, and resources, administrators of the client systems are reluctant to update their systems and products to the latest software versions. A system may be running applications that are unable to tolerate downtime or may be utilizing particular functionalities that could potentially be impacted (e.g., removed) by a software update, which may deter administrators from updating at all, leaving their systems exposed to potential security risks.

The present disclosure addresses the above-noted and other deficiencies by using a processing device to receive a detection logic element, referred to herein as a "detection element," from a vulnerability analyzer. In some embodiments, the detection element is an OVAL (Open Vulnerability and Assessment Language) detection element. The detection element includes a vulnerability identifier and a software version identifier. The vulnerability identifier corresponds to a vulnerability of an application and the software version identifier corresponds to a software version of the application affected by the vulnerability. In some embodiments, the detection element includes an operation (e.g., "<," "<=," "=") to correspond with the software version identifier. The processing device determines, based on the software version identifier and the operation, a software remediation version of the application that remediates the vulnerability. In turn, the processing device initiates an update at the client system based on the vulnerability and the software remediation version of the application. In some embodiments, initiating an update includes, for example, sending a message to the client system, pushing an update to the client system, or a combination thereof.

In some embodiments, the processing device identifies a minimal vulnerability corresponding to a portion of known vulnerabilities. In turn, the processing device determines a minimal software remediation version based on the minimal vulnerability to remediate the portion of known vulnerabilities. In some embodiments, the software remediation version, as well as the minimal software remediation version, are different software versions than a most recent software version of the application.

In some embodiments, the approach provides a dynamic parsing and matching function to extract information from the components within the detection elements. In some embodiments, the processing device parses state information from the detection element to capture the vulnerability identifier. The processing device determines whether the state information includes the software version identifier and the operation. When the state information includes the software version identifier and the operation, the processing device uses the software version identifier and the operation included in the state information to determine the software remediation version. When the state information omits the software version identifier and the operation, the processing device parses comment information from the detection element to capture the software version identifier and the operation. In turn, the processing device utilizes the software version identifier and the operation from the comment information to determine the software remediation version. In some embodiments, the detection element includes an application track for the application that the processing device also utilizes to determine the software remediation version.

In some embodiments, the approach uses the detection elements as a singular source of information and eliminates the need for additional data sources, which prioritizes efficiency and reduces the complexity associated with integrating and analyzing data from multiple sources. The approach streamlines the process and avoids the potential confusion and contradictions that may arise from multiple data feeds. In some embodiments, the approach infers a software remediation version by understanding and parsing the elements and comments within the detection source to comprehend the implications of each vulnerability. The approach then discerns the relationship between vulnerabilities, their possible impact on the application, and the appropriate operations for remediation.

As discussed herein, the present disclosure provides an approach that improves the operation of a computer system by leveraging a single source of information to produce higher velocity and accuracy in the vulnerability detection and remediation process. Since the software remediation version is inferred directly from the detection elements collected during the vulnerability assessment process, there is less room for error or confusion. In addition, the present disclosure provides an improvement to the technological field of vulnerability remediation by using a single source approach to ensure that the guidance provided to the client system and the client system administrator is dependable, accurate, and timely, enhancing the overall effectiveness and convenience of the vulnerability remediation process. In addition, the present disclosure provides an improvement to the technological field of vulnerability remediation by determining a minimal software remediation version based on a system's particular vulnerability remediation requirements.

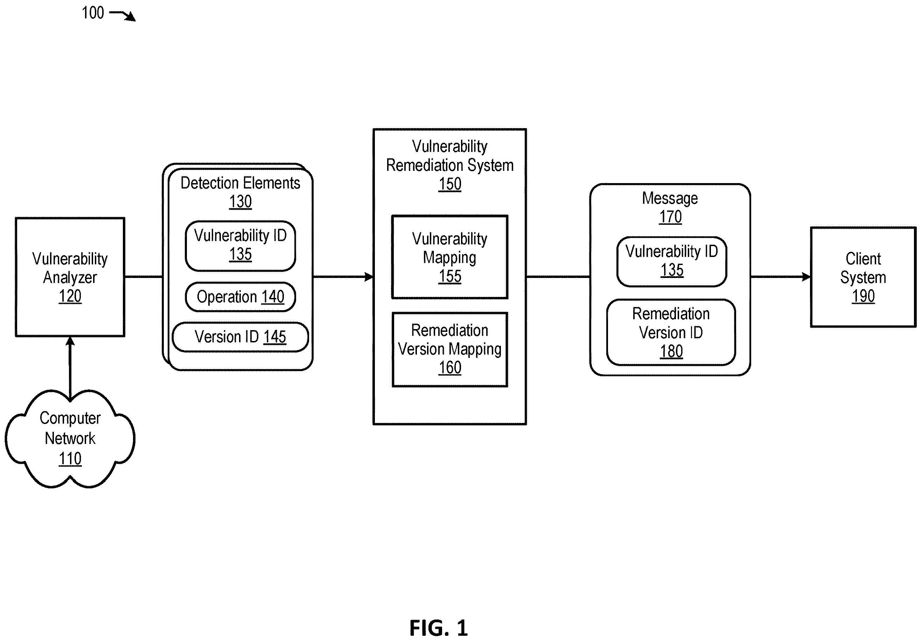

FIG. 1 is a block diagram that illustrates an example system that uses detection elements for determining a version of software to remediate vulnerabilities of an application, in accordance with some embodiments of the present disclosure.

System 100 includes vulnerability analyzer 120 and vulnerability remediation system 150. Vulnerability analyzer 120 analyzes data from computer network 110 and is configured to produce detection elements 130, which include identifiers or attributes of vulnerabilities detected by vulnerability analyzer 120. Detection elements 130 may include a type of vulnerability, its severity level, where the vulnerability is located, when the vulnerability was detected, etc. In some embodiments, detection elements 130 are OVAL (Open Vulnerability and Assessment Language) detection elements. Each of detection elements 130 includes a vulnerability identifier 135, an operation 140, and a version identifier 145. Vulnerability identifier 135 identifies a particular vulnerability, such as vulnerability "A." Operation 140 may be an operation of "<," "<=, "=," etc., and version identifier 145 corresponds to a software version of the application that is effected by the corresponding vulnerability ("A"). For example, a vulnerability identifier "A" and an operation and version identifier of "<=5" indicates that versions 5 and lower are effected by vulnerability A.

Vulnerability remediation system 150 parses detection elements 130 to obtain each of their respective vulnerability identifiers 135, operations 140, and version identifiers 145. In some embodiments, detection elements 130 includes state information and comment information. Vulnerability remediation system 150 then parses the state information to identify the vulnerability identifier and determine whether the state information also includes operation 140 and version identifier 145. When the state information does not include operation 140 and version identifier 145, vulnerability remediation system 150 then parses the comment information to obtain operation 140 and version identifier 145.

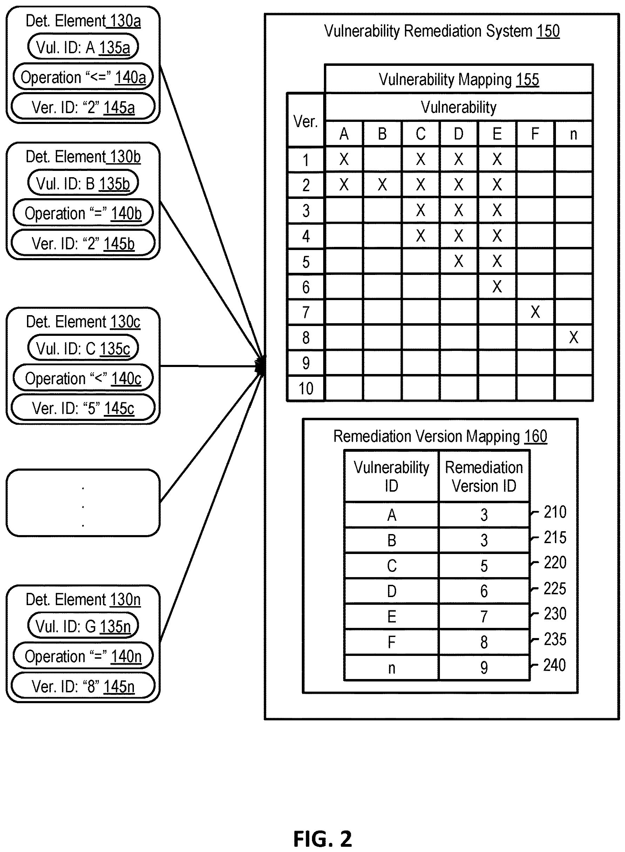

Vulnerability remediation system 150 then maps the vulnerability identifiers and version identifiers to vulnerability mapping 155 based on, for example, their corresponding operations. Vulnerability mapping 155 may be, for example, a table, a database, vectors, etc. (see FIG. 2 and corresponding text for further details). Vulnerability remediation system 150 uses vulnerability mapping 155 to produce remediation version mapping 160, which maps each vulnerability to a corresponding remediation version of the application that remediates the vulnerability (see FIG. 2 and corresponding text for further details).

Vulnerability remediation system 150 uses remediation version mapping 160 to determine a remediation version of the application that remediates known vulnerabilities, and also to determine minimal remediation versions of the application to remediate some vulnerabilities based on a client system's requirements. For example, vulnerability mapping may include information for vulnerabilities A through G, but client system 190 is interested in remediation vulnerabilities A through C. As such, vulnerability remediation system 150 uses remediation version mapping 160 to determine which software version remediates vulnerability A through C.

In turn, vulnerability remediation system 150 sends message 170 to client system 190. Message 170 includes vulnerability identifier 135 (or a vulnerability identifier corresponding to a minimal vulnerability) and remediation version identifier 180. In some embodiments, message 170 invokes client system 190 to automatically update the application to the software version corresponding to remediation version identifier 180. For example, client system 190 may use remediation version identifier 180 to locate, download, and update the corresponding software version of the application. In some embodiments, client system 190 may determine an appropriate time to update the application, such as between 2:00AM-4:00AM.

FIG. 2 is a block diagram that illustrates an example system that maps vulnerabilities to effected versions of an application and determines versions of the application to remediate the vulnerabilities, in accordance with some embodiments of the present disclosure.

Vulnerability remediation system 150 parses detection elements 130 to extract their corresponding vulnerability identifiers 135, operations 140, and version identifiers 145. Vulnerability remediation system 150 then stores mapping entries into vulnerability mapping 155, which maps vulnerabilities to versions effected by the vulnerabilities (e.g. marked with an "X"). FIG. 2 shows that detection element 130a includes vulnerability identifier A (135a), operation "<=" (140a), and version identifier "2" (145a). As such, vulnerability mapping 155 shows that for vulnerability A, version 1 and version 2 are vulnerable. Detection element 130b includes vulnerability identifier B (135b), operation "=" (140b), and version identifier "2" (145b). As such, vulnerability mapping 155 shows that version 2 is vulnerable to vulnerability B. Detection element 130c includes vulnerability identifier C (135c), operation "<" (140c), and version identifier "5" (145c). As such, vulnerability mapping 160 shows that for vulnerability C, versions 1 through 4 are vulnerable. Vulnerability remediation system 150 continues to receive detection elements for vulnerabilities D, E, and F (not shown), and n. Detection element 130n includes vulnerability identifier G (135n), operation "=" (140n), and version identifier "8" (145n). As such, vulnerability mapping 160 shows that that version 8 is vulnerable to vulnerability n.

Vulnerability remediation system 150 then uses vulnerability mapping 155 to generate remediation version mapping 160. Remediation version mapping 160 includes entries that map vulnerabilities to their corresponding remediation software version. Remediation version mapping 160 indicates which version remediates the known vulnerabilities, which may not be the most recent version. For example, vulnerability mapping 155 shows that the most recent software version is version 10. However, vulnerability mapping 155 shows that version 9 remediates each of the currently known vulnerabilities A through n. As such, remediation version mapping 160 shows, in entry 240, that version 9 remediates each of the currently known vulnerabilities A through n.

Vulnerability remediation system 150 also provides alternatives to remediate a particular vulnerability without updating their software to version 9. This enables client systems and client system administrators to prioritize and address vulnerabilities based on their individual security concerns and operational requirements. Vulnerability remediation system 150 determines a "minimal" software remediation version for each of the vulnerabilities so that a client system application may be updated to a minimal version to resolve pertinent vulnerabilities (210 through 235). Remediation version mapping 160 shows that version 3 remediates vulnerability A (210) and up to vulnerability B (215). Version 5 remediates vulnerabilities up to vulnerability C (220). Version 6 remediates vulnerabilities up to vulnerability D (225), and version 7 remediates vulnerabilities up to vulnerability E (230). Version 8 remediates vulnerabilities up to vulnerability F (235). As can be seen, depending on which vulnerability is important to a client system, vulnerability remediation system 150 can inform the client system or client system administrator which software version to update their application accordingly.

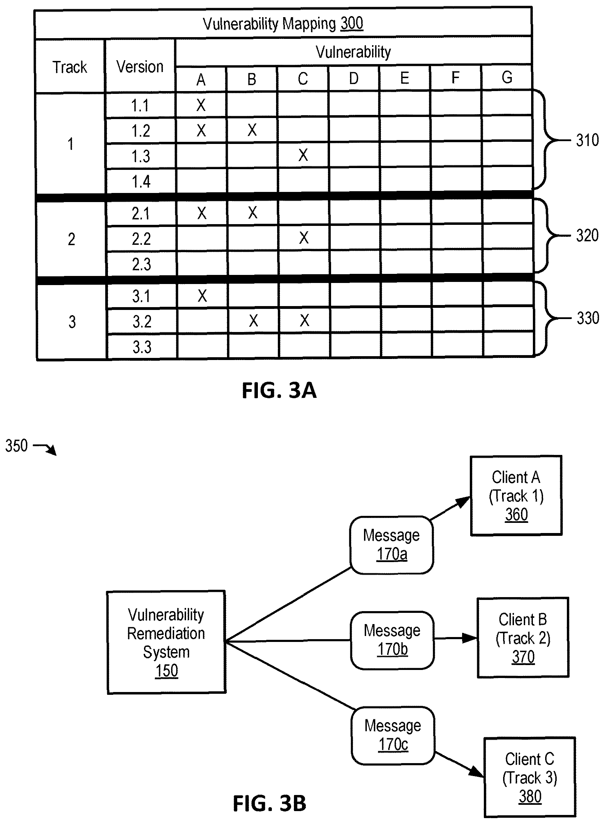

FIG. 3A is a diagram that illustrates an example vulnerability mapping table that maps vulnerabilities to application tracks, in accordance with some embodiments of the present disclosure. Applications may have multiple released versions, such as those maintained by vendors. In some embodiments, client systems may not be allowed to update to the latest version of an update for a different application track. For example, track updates (e.g., Track 1 to Track 2) may involve major changes to the application and the client system may be using features that are changed or do not work in newer application tracks.

To maintain application track distinction, vulnerability remediation system 150 captures track information from detection elements 130 and sorts the vulnerabilities and version identifiers according to their application track. Vulnerability mapping 300 shows entries 310 correspond to track 1, entries 320 correspond to track 2, and entries 330 correspond to track 3. Vulnerability remediation system 150 then determines a respective remediation version identifier based on a client system's application track (see FIG. 3B and corresponding text for further details).

FIG. 3B is a diagram that illustrates an example system of sending different vulnerability remediation messages to different client systems based on their respective application tracks, in accordance with some embodiments of the present disclosure.

System 350 shows client A 360 is on track 1, client B 370 is on track 2, and client C is on track 3. Referring to FIG. 3A, vulnerability remediation system 150 sends message 170a to client A 360 that identifies remediation version identifier "1.4" to remediate vulnerabilities in track 1. Vulnerability remediation system 150 sends message 170b to client B 370 that identifies remediation version identifier "2.3" to remediate vulnerabilities in track 2. Vulnerability remediation system 150 sends message 170c to client C 380 that identifies remediation version identifier "3.3" to remediate vulnerabilities in track 3. As discussed above, vulnerability remediation system 150 may also identify minimal remediation versions to resolve particular vulnerabilities as requested by clients A 360, B 370, and C 380.

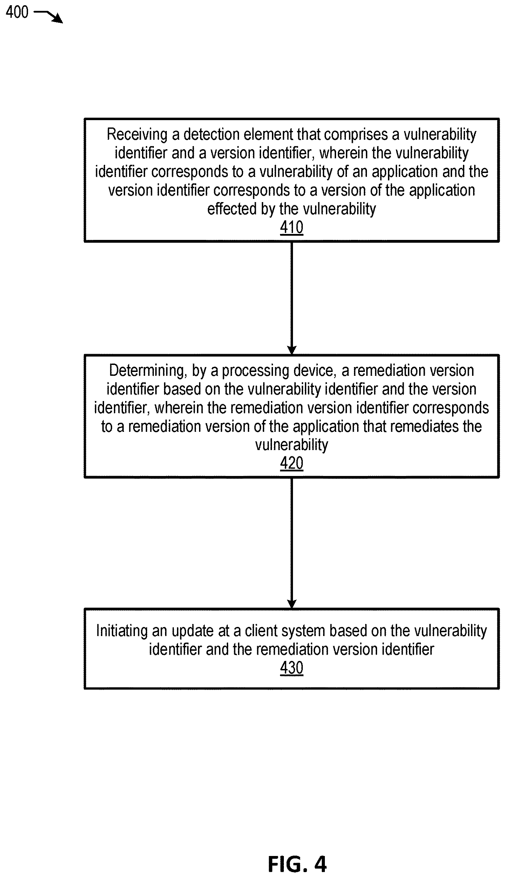

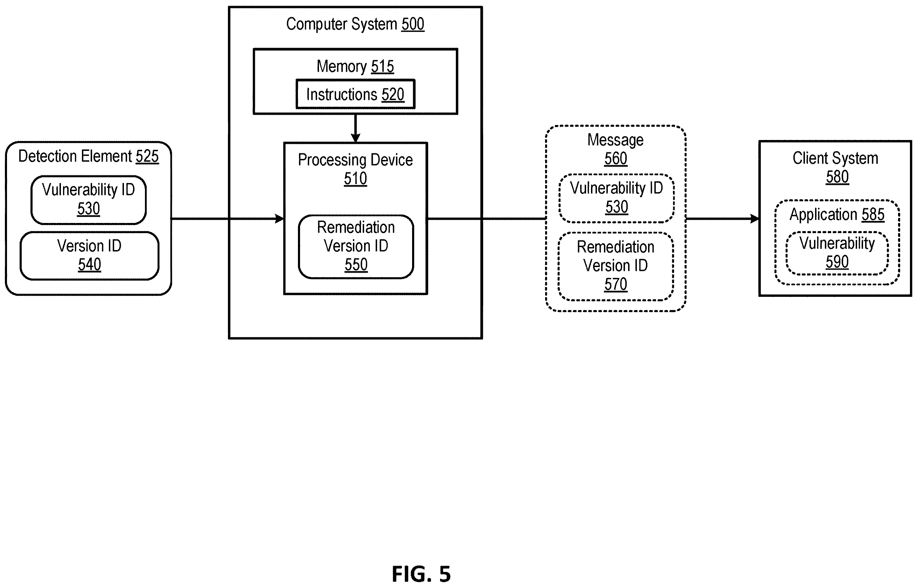

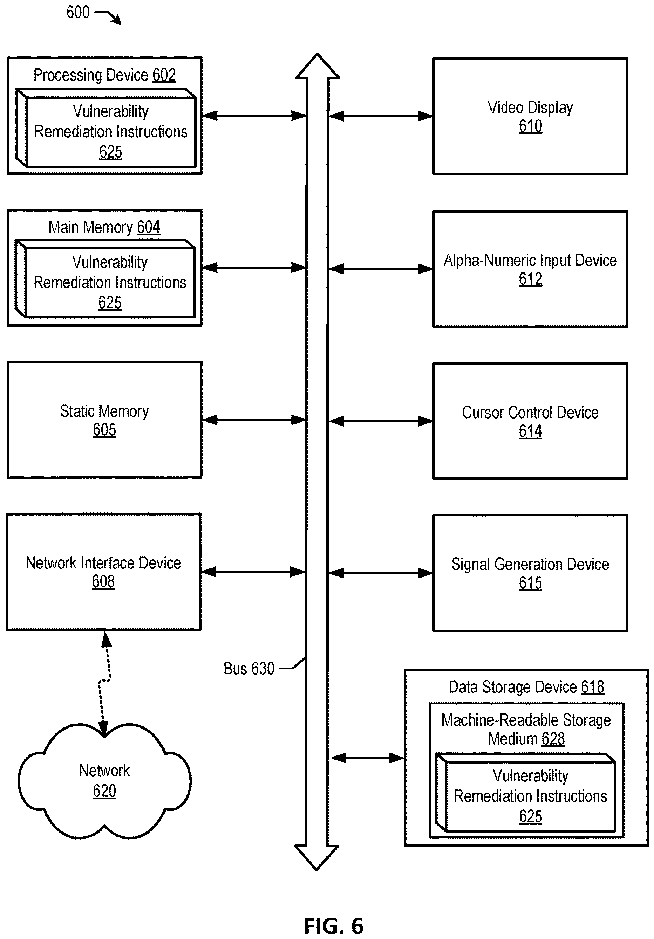

FIG. 4 is a flow diagram of a method that receives a detection element and determines a version of an application to remediate a vulnerability identified by the detection element, in accordance with some embodiments of the present disclosure. Method 400 may be performed by processing logic that may include hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, at least a portion of method 400 may be performed by vulnerability remediation system 150, processing device 510 (shown in FIG. 5), processing device 602 (shown in FIG. 6), or a combination thereof.

With reference to FIG. 4, method 400 illustrates example functions used by various embodiments. Although specific function blocks ("blocks") are disclosed in method 400, such blocks are examples. That is, embodiments are well suited to performing various other blocks or variations of the blocks recited in method 400. It is appreciated that the blocks in method 400 may be performed in an order different than presented, and that not all of the blocks in method 400 may be performed.

With reference to FIG. 4, method 400 begins at block 410, whereupon processing logic receives a detection element that includes a vulnerability identifier and a version identifier. The vulnerability identifier corresponds to a vulnerability of an application and the version identifier corresponds to a version of the application effected by the vulnerability. In one embodiment, the detection element includes state information, and the processing logic parses the state information to capture the vulnerability identifier. Processing logic determines whether the state information includes the software version identifier and an operation. In response to determining that the state information includes the software version identifier and the operation, processing logic determines the software remediation version using the software version identifier and the operation included in the state information. In some embodiments, the detection element also includes comment information and, when the state information omits the software version identifier and the operation, processing logic parses the comment information to capture the software version identifier and the operation. In turn, processing logic utilizes the software version identifier and the operation in the comment information to determine the software remediation version.

At block 420, processing logic determines a remediation version identifier based on the vulnerability identifier and the version identifier. The remediation version identifier corresponds to a remediation version of the application that remediates the vulnerability. In some embodiments, processing logic identifies a minimal vulnerability based on the vulnerability identifiers, which is different than a most recent vulnerability from the multiple vulnerabilities. In turn, the processing device determines a minimal software remediation version based on the minimal vulnerability, the software version identifiers, and the operations, which is a software version of the application that remediates the minimal vulnerability.

At block 430, processing logic initiates an update at a client system based on the vulnerability identifier and the remediation version identifier. In some embodiments, initiating an update includes, for example, sending a message to the client system, pushing an update to the client system, or a combination thereof.

FIG. 5 is a block diagram that illustrates an example system for determining a software remediation version of an application to remediate a vulnerability of the application, in accordance with some embodiments of the present disclosure.

Computer system 500 includes processing device 510 and memory 515. Memory 515 stores instructions 520 that are executed by processing device 510. Instructions 520, when executed by processing device 510, cause processing device 510 receive detection element 525 that includes vulnerability identifier 530 and version identifier 540. Vulnerability identifier 530 corresponds to a vulnerability (590) of an application (585) and version identifier 540 corresponds to a software version of the application effected by the vulnerability.

Processing device 510 determines a remediation version identifier (550) based on the vulnerability identifier 530 and the version identifier 540. The remediation version identifier corresponds to a remediation version of the application that remediates the vulnerability. In turn, processing device 510 initiates an update at client system 580 based on vulnerability identifier 530 and remediation version identifier 570. In some embodiments, initiating an update includes, for example, sending message 560 to the client system, pushing an update to the client system, or a combination thereof.. In some embodiments, remediation version identifier 570 may be the actual software version to remediate the vulnerability.

FIG. 6 illustrates a diagrammatic representation of a machine in the example form of a computer system 600 within which a set of instructions, for causing the machine to perform any one or more of the methodologies discussed herein for vulnerability remediation.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In some embodiments, computer system 600 may be representative of a server.

The exemplary computer system 600 includes a processing device 602, a main memory 604 (e.g., read-only memory (ROM), flash memory, dynamic random access memory (DRAM), a static memory 606 (e.g., flash memory, static random access memory (SRAM), etc.), and a data storage device 618 which communicate with each other via a bus 630. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

Computing device 600 may further include a network interface device 608 which may communicate with a network 620. The computing device 600 also may include a video display unit 610 *(e.g.,* a liquid crystal display (LCD) or a cathode ray tube (CRT)), an alphanumeric input device 612 *(e.g.,* a keyboard), a cursor control device 614 *(e.g.,* a mouse) and an acoustic signal generation device 616 *(e.g.,* a speaker). In some embodiments, video display unit 610, alphanumeric input device 612, and cursor control device 614 may be combined into a single component or device *(e.g.,* an LCD touch screen).

Processing device 602 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 602 may also be one or more special-purpose processing devices such as an application specific integrated circuit (ASIC), a field programmable gate array (FPGA), a digital signal processor (DSP), network processor, or the like. The processing device 602 is configured to execute vulnerability remediation instructions 625, for performing the operations and steps discussed herein.

The data storage device 618 may include a machine-readable storage medium 628, on which is stored one or more sets of vulnerability remediation instructions 625 (e.g., software) embodying any one or more of the methodologies of functions described herein. The vulnerability remediation instructions 625 may also reside, completely or at least partially, within the main memory 604 or within the processing device 602 during execution thereof by the computer system 600; the main memory 604 and the processing device 602 also constituting machine-readable storage media. The vulnerability remediation instructions 625 may further be transmitted or received over a network 620 via the network interface device 608.

The machine-readable storage medium 628 may also be used to store instructions to perform a method for intelligently scheduling containers, as described herein. While the machine-readable storage medium 628 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable medium includes any mechanism for storing information in a form (e.g., software, processing application) readable by a machine (e.g., a computer). The machine-readable medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "receiving," "determining," "sending," "identifying," "parsing," "utilizing," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. § 112(f) for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein, but may be modified within the scope and equivalents of the appended claims.

## Claims

1. A method comprising:
receiving a detection element that comprises a vulnerability identifier and a version identifier, wherein the vulnerability identifier corresponds to a vulnerability of an application and the version identifier corresponds to a version of the application effected by the vulnerability;
determining, by a processing device, a remediation version identifier based on the vulnerability identifier and the version identifier, wherein the remediation version identifier corresponds to a remediation version of the application that remediates the vulnerability; and
initiating an update at a client system based on the vulnerability identifier and the remediation version identifier.

2. The method of claim 1, further comprising:
receiving a plurality of detection elements, wherein each one of the plurality of detection elements comprises a respective vulnerability identifier from a plurality of vulnerability identifiers, a respective version identifier from a plurality of version identifiers, and a corresponding operation from a plurality of operations corresponding to the respective version identifier; and
wherein the remediation version of the application remediates each one of a plurality of vulnerabilities corresponding to the plurality of vulnerability identifiers.

3. The method of claim 2, wherein the remediation version is a different version than a most recent version of the application.

4. The method of claim 2 or 3, further comprising:
identifying a minimal vulnerability of the client system, wherein the minimal vulnerability corresponds to a portion of the plurality of vulnerabilities that impact the client system;
determining a minimal remediation identifier based on the minimal vulnerability, the plurality of version identifiers, and the plurality of operations, wherein the minimal remediation identifier corresponds to a minimal remediation version of the application that remediates the portion of the plurality of vulnerabilities; and
wherein the initiating is based on the vulnerability identifier and the minimal remediation identifier.

5. The method of any preceding claim, wherein the determining of the remediation version identifier further comprises:
parsing state information included in the detection element to capture the vulnerability identifier;
determining whether the state information comprises the version identifier and an operation; and
in response to determining that the state information comprises the version identifier and the operation, using the version identifier and the operation included in the state information during the determining of the remediation version identifier.

6. The method of claim 5, wherein the detection element comprises the state information and comment information, the method further comprising:
in response to determining that the state information omits the version identifier and the operation, parsing the comment information to capture the version identifier and the operation; and
utilizing the version identifier and the operation in the comment information during the determining of the remediation version identifier.

7. The method of any preceding claim, wherein the detection element comprises an application track corresponding to the application, and wherein the application track is utilized to determine the remediation version identifier.

8. A system comprising:
a processing device; and
a memory to store instructions that, when executed by the processing device cause the processing device to:
receive a detection element that comprises a vulnerability identifier and a version identifier, wherein the vulnerability identifier corresponds to a vulnerability of an application and the version identifier corresponds to a version of the application effected by the vulnerability;
determine a remediation version identifier based on the vulnerability identifier and the version identifier, wherein the remediation version identifier corresponds to a remediation version of the application that remediates the vulnerability; and
initiate an update at a client system based on the vulnerability identifier and the remediation version identifier.

9. The system of claim 8, wherein the processing device, responsive to executing the instructions, further causes the system to:
receive a plurality of detection elements, wherein each one of the plurality of detection elements comprises a respective vulnerability identifier from a plurality of vulnerability identifiers, a respective version identifier from a plurality of version identifiers, and a corresponding operation from a plurality of operations corresponding to the respective version identifier; and
wherein the remediation version of the application remediates each one of a plurality of vulnerabilities corresponding to the plurality of vulnerability identifiers.

10. The system of claim 9, wherein the remediation version is a different version than a most recent version of the application.

11. The system of claim 9 or 10, wherein the processing device, responsive to executing the instructions, further causes the system to:
identify a minimal vulnerability of the client system, wherein the minimal vulnerability corresponds to a portion of the plurality of vulnerabilities that impact the client system;
determine a minimal remediation identifier based on the minimal vulnerability, the plurality of version identifiers, and the plurality of operations, wherein the minimal remediation identifier corresponds to a minimal remediation version of the application that remediates the portion of the plurality of vulnerabilities; and
wherein the initiating is based on the vulnerability identifier and the minimal remediation identifier.

12. The system of any one of claims 8 to 11, wherein the processing device, responsive to executing the instructions, further causes the system to:
parse state information included in the detection element to capture the vulnerability identifier;
determine whether the state information comprises the version identifier and an operation; and
in response to determining that the state information comprises the version identifier and the operation, using the version identifier and the operation included in the state information during the determination of the remediation version identifier.

13. The system of claim 12, wherein the detection element comprises the state information and comment information, and wherein the processing device, responsive to executing the instructions, further causes the system to:
in response to determining that the state information omits the version identifier and the operation, parse the comment information to capture the version identifier and the operation; and
utilize the version identifier and the operation in the comment information during the determination of the remediation version identifier.

14. The system of any one of claims 8 to 13, wherein the detection element comprises an application track, from a plurality of application tracks, corresponding to the application, and wherein the application track is utilized to determine the remediation version identifier.

15. A computer program which, when executed by a processing device, is configured to cause the processing device to carry out the method of any one of claims 1 to 7.
